# EUROPEAN PATENT APPLICATION

(11) **EP 3 925 772 A1**
(43) Date of publication of application: **22.12.2021**
(21) Application number: 21180297.0
(22) Date of filing: 18.06.2021
(51) Int. Cl.: B32B 15/01, C21D 8/02, C22C 38/08, C22C 38/10, C21D 6/00

(54) **GRADIENT ARMOR PLATE**

(30) Priority: 18.06.2020 US 202063040616 P
(71) Applicant: CRS Holdings, Inc., Wilmington DE 19801 (US)
(72) Inventor: NOVOTNY, Paul M., Mohnton, 19540 (US)
(74) Representative: Mewburn Ellis LLP

(57) **Abstract**

A composite armor plate is disclosed. The composite armor plate includes a first layer made from an ultra-high hardness, high strength alloy that is bonded to a second layer made from a high fracture toughness alloy that also may have high strength. The composite armor plate according to the present provides a gradient of strength, hardness, and toughness. The composite armor plate according to the invention may also include third and fourth layers of different alloys that provide combinations of hardness, strength, and fracture toughness that are intermediate of the hardness, strength, and fracture toughness provided by the first and second steel layers. A method of making the composite armor plate is also disclosed.

## Description

### BACKGROUND OF THE INVENTION

### FIELD OF THE INVENTION

This invention relates generally to armor plate for military and civilian vehicles, and in particular to an armor plate article that is consists of two or more layers of different steel alloys and also to a method of making the layered armor plate.

### DESCRIPTION OF THE RELATED ART

Armor plate must be hard enough to reliably shatter the hard steel cores of armor-piercing (AP) projectiles and must also have enough toughness to resist plate cracking in order to effectively defeat a high energy AP projectile. The steel core of an AP projectile typically has a hardness of at least about 60 HRC. Therefore, the armor plate must have at least about the same hardness in order to be able to shatter the projectile on contact. The level of fracture toughness that is required to resist plate cracking varies with plate thickness and the type of projectile, but a generally accepted rule of thumb calls for a plane strain fracture toughness (K_{Ic}) of at least about 50 ksi√in (54.9 MPa√m). There is no known steel alloy that is able to achieve that combination of hardness and fracture toughness.

Armor plate is known that consists of two layers made from different alloys that are bonded together. However, the known plate products leave something to be desired with respect to the combination of hardness and toughness that is required to effectively thwart a high energy AP projectile such as a 30 caliber or 50 caliber AP projectile. Accordingly, there is a need for an armor plate that provides not only a very high hardness of at least about 60 HRC, but also a fracture toughness of at least about 50 ksi√in (54.9 MPa√m).

### SUMMARY OF THE INVENTION

The need for effective armor plate described above is resolved to a large degree by a composite armor plate product in accordance with a first aspect of the present invention. The composite armor plate includes a first layer made from an ultra-high hardness, high strength alloy that is bonded to a second layer made from a high fracture toughness alloy that also may have high strength. The composite armor plate according to the present provides a gradient of strength, hardness, and toughness.

According to a first embodiment, the armor plate according to the present invention comprises a first steel layer made from a first steel alloy having the following composition in weight percent,

| | | | |
|---|---|---|---|
| **C** | 0.30-0.46 | 0.30-0.46 | 0.35-0.46 |
| **Mn** | 0.04 max. | 0.04 max. | 0.04 max. |
| **Si** | 0.03 max. | 0.03 max. | 0.03 max. |
| **P** | 0.003 max | 0.003 max | 0.003 max. |
| **S** | 0.0010 max. | 0.0010 max. | 0.0010 max. |
| **Cr** | 1.65-2.90 | 1.65-2.90 | 1.65-2.90 |
| **Ni** | 10.5-13.0 | 10.5-13.0 | 10.5-13.0 |
| **Mo** | 1.2-3.4 | 1.8-3.4 | 1.2-3.4 |
| **Co** | 15.4-18.6 | 15.4-18.6 | 15.4-18.6 |
| **Al** | 0.003 max | 0.003 max | 0.003 max |
| **Ti** | 0.015 max. | 0.015 max. | 0.015 max. |
| **O** | 0.0010 max. | 0.0010 max. | 0.0010 max. |
| **N** | 0.0010 max. | 0.0010 max. | 0.0010 max. |

and the balance is iron and impurities, said impurities including not more than about 0.003% phosphorus, not more than about 0.0010% sulfur, not more than about 0.0010% oxygen, and not more than about 0.0010% nitrogen, and a second steel layer made from a second steel alloy having the following composition in weight percent,

| | | | |
|---|---|---|---|
| **C** | 0.2-0.33 | 0.20-0.31 | 0.21-0.27 |
| **Mn** | 0.20 max. | 0.15 max. | 0.05 max. |
| **Si** | 0.1 max. | 0.1 max. | 0.1 max. |
| **P** | 0.008 max. | 0.008 max. | 0.008 max. |
| **S** | 0.0040 max. | 0.0025 max. | 0.0020 |
| **Cr** | 2-4 | 2.25-3.5 | 2.5-3.3 |
| **Ni** | 10.5-15 | 10.75-13.5 | 11.0-12.0 |
| **Mo** | 0.75-1.75 | 0.75-1.5 | 1.0-1.3 |
| **Co** | 8-17 | 10-15 | 11-14 |
| **Ti** | 0.02 max | 0.02 max | 0.02 max |
| **Al** | 0.01 max. | 0.01 max. | 0.01 max.. |
| **Ce** | SBE up to 0.030 | SBE-0.030 | 0.01 max. |
| **La** | SBE up to 0.01 | SBE-0.01 | 0.005 max |

and the balance is iron and impurities. The first steel layer has a first planar surface that is bonded to a first planar surface of the second steel layer to form a composite armor plate.

In accordance with a second aspect of the present invention there is provided a gradient armor plate that has 3 or 4 steel layers. The gradient armor plate according to this aspect of the invention includes a first layer made from an ultra-high strength alloy, a second layer made from a high strength, high fracture toughness alloy, and one or more intermediate steel layers located between the first and second layers and that is(are) characterized by a combination(s) of strength and fracture toughness that is(are) intermediate the strength and toughness properties of the first and second steel layers. The steel layers in this embodiment are selected to provide a gradient of the properties ranging from the highest hardness and strength in the first layer to the highest fracture toughness in the second layer.

According to an embodiment of the second aspect of the present invention, the armor plate comprises a first steel layer made from a first steel alloy having the following composition in weight percent,

| | | | |
|---|---|---|---|
| **C** | 0.30-0.46 | 0.30-0.46 | 0.35-0.46 |
| **Mn** | 0.04 max. | 0.04 max. | 0.04 max. |
| **Si** | 0.03 max. | 0.03 max. | 0.03 max. |
| **P** | 0.003 max | 0.003 max | 0.003 max |
| **S** | 0.0010 max. | 0.0010 max. | 0.0010 max. |
| **Cr** | 1.65-2.90 | 1.65-2.90 | 1.65-2.90 |
| **Ni** | 10.5-13.0 | 10.5-13.0 | 10.5-13.0 |
| **Mo** | 1.2-3.4 | 1.8-3.4 | 1.2-3.4 |
| **Co** | 15.4-18.6 | 15.4-18.6 | 15.4-18.6 |
| **Al** | 0.003 max | 0.003 max | 0.003 max |
| **Ti** | 0.015 max. | 0.015 max. | 0.015 max. |
| **O** | 0.0010 max. | 0.0010 max. | 0.0010 max. |
| **N** | 0.0010 max. | 0.0010 max. | 0.0010 max. |

and the balance is iron and impurities, said impurities including not more than about 0.003% phosphorus, not more than about 0.0010% sulfur, not more than about 0.0010% oxygen, and not more than about 0.0010% nitrogen, a second steel layer made from a second steel alloy having the following composition in weight percent,

| | | | |
|---|---|---|---|
| **C** | 0.2-0.33 | 0.20-0.31 | 0.21-0.27 |
| **Mn** | 0.20 max. | 0.15 max. | 0.05 max. |
| **Si** | 0.1 max. | 0.1 max. | 0.1 max. |
| **P** | 0.008 max. | 0.008 max. | 0.008 max. |
| **S** | 0.0040 max. | 0.0025 max. | 0.0020 |
| **Cr** | 2-4 | 2.25-3.5 | 2.5-3.3 |
| **Ni** | 10.5-15 | 10.75-13.5 | 11.0-12.0 |
| **Mo** | 0.75-1.75 | 0.75-1.5 | 1.0-1.3 |
| **Co** | 8-17 | 10-15 | 11-14 |
| **Ti** | 0.02 max | 0.02 max | 0.02 max |
| **Al** | 0.01 max. | 0.01 max. | 0.01 max. |
| **Ce** | SBE up to 0.030 | SBE-0.030 | 0.01 max. |
| **La** | SBE up to 0.01 | SBE-0.01 | 0.005 max. |

and the balance is iron and impurities, and a third steel layer made from a third steel alloy having the following composition in weight percent.

| | | |
|---|---|---|
| **C** | 0.21-0.34 | 0.22-0.30 |
| **Mn** | 0.20 max. | 0.05 max. |
| **Si** | 0.10 max. | 0.10 max. |
| **P** | 0.008 max. | 0.006 max. |
| **S** | 0.003 max. | 0.002 max. |
| **Cr** | 1.5-2.8 | 1.80-2.80 |
| **Mo** | 0.90-1.80 | 1.10-1.70 |
| **Ni** | 10-13 | 10.5-11.5 |
| **Co** | 14.0-22.0 | 14.0-20.0 |
| **Al** | 0.1 max. | 0.01 max. |
| **Ti** | 0.05 max. | 0.02 max. |
| **Ce** | 0.030 max. | 0.01 max. |
| **La** | 0.010 max. | 0.005 max. |

The third steel layer is positioned between the first steel layer and the second steel layer. The first steel layer has a first planar surface that is bonded to a first planar surface of the third steel layer and the second steel layer has a first planar surface that is bonded to a second planar surface of the third steel layer.

According to a second embodiment of the second aspect of the present invention, the armor plate comprises a first steel layer made from a first steel alloy having the following composition in weight percent,

| | | | |
|---|---|---|---|
| **C** | 0.30-0.46 | 0.30-0.46 | 0.35-0.46 |
| **Mn** | 0.04 max. | 0.04 max. | 0.04 max. |
| **Si** | 0.03 max. | 0.03 max. | 0.03 max. |
| **P** | 0.003 max | 0.003 max | 0.003 max |
| **S** | 0.0010 max. | 0.0010 max. | 0.0010 max. |
| **Cr** | 1.65-2.90 | 1.65-2.90 | 1.65-2.90 |
| **Ni** | 10.5-13.0 | 10.5-13.0 | 10.5-13.0 |
| **Mo** | 1.2-3.4 | 1.8-3.4 | 1.2-3.4 |
| **Co** | 15.4-18.6 | 15.4-18.6 | 15.4-18.6 |
| **Al** | 0.003 max | 0.003 max | 0.003 max |
| **Ti** | 0.015 max. | 0.015 max. | 0.015 max. |
| **O** | 0.0010 max. | 0.0010 max. | 0.0010 max. |
| **N** | 0.0010 max. | 0.0010 max. | 0.0010 max. |

and the balance is iron and impurities, said impurities including not more than about 0.003% phosphorus, not more than about 0.0010% sulfur, not more than about 0.0010% oxygen, and not more than about 0.0010% nitrogen, a second steel layer made from a second steel alloy having the following composition in weight percent,

| | | | |
|---|---|---|---|
| **C** | 0.2-0.33 | 0.20-0.31 | 0.21-0.27 |
| **Mn** | 0.20 max. | 0.15 max. | 0.05 max. |
| **Si** | 0.1 max. | 0.1 max. | 0.1 max. |
| **P** | 0.008 max. | 0.008 max. | 0.008 max. |
| **S** | 0.0040 max. | 0.0025 max. | 0.0020 |
| **Cr** | 2-4 | 2.25-3.5 | 2.5-3.3 |
| **Ni** | 10.5-15 | 10.75-13.5 | 11.0-12.0 |
| **Mo** | 0.75-1.75 | 0.75-1.5 | 1.0-1.3 |
| **Co** | 8-17 | 10-15 | 11-14 |
| **Ti** | 0.02 max | 0.02 max | 0.02 max |
| **Al** | 0.01 max. | 0.01 max. | 0.01 max. |
| **Ce** | SBE up to 0.030 | SBE-0.030 | 0.01 max. |
| **La** | SBE up to 0.01 | SBE-0.01 | 0.005 max. |

and the balance is iron and impurities, a third steel layer made from a third steel alloy having the following composition in weight percent,

| | | |
|---|---|---|
| **C** | 0.21-0.34 | 0.22-0.30 |
| **Mn** | 0.20 max. | 0.05 max. |
| **Si** | 0.10 max. | 0.10 max. |
| **P** | 0.008 max. | 0.006 max. |
| **S** | 0.003 max. | 0.002 max. |
| **Cr** | 1.5-2.8 | 1.80-2.80 |
| **Mo** | 0.90-1.80 | 1.10-1.70 |
| **Ni** | 10-13 | 10.5-11.5 |
| **Co** | 14.0-22.0 | 14.0-20.0 |
| **Al** | 0.1 max. | 0.01 max. |
| **Ti** | 0.05 max. | 0.02 max. |
| **Ce** | 0.030 max. | 0.01 max. |
| **La** | 0.010 max. | 0.005 max. |

and the balance is iron and impurities, and a fourth steel layer made from a fourth steel alloy having the following composition in weight percent,

| | | | |
|---|---|---|---|
| **C** | 0.30-0.36 | 0.32-0.35 | 0.32-0.34 |
| **Mn** | 0.05 max. | 0.02 max. | 0.01 max. |
| **Si** | 0.05 max. | 0.05 max. | 0.03 max. |
| **P** | 0.01 max. | 0.005 max. | 0.003 max. |
| **S** | 0.0010 max. | 0.0010 max. | 0.0005 max. |
| **Cr** | 1.30-3.2 | 2.0-2.5 | 2.20-2.30 |
| **Ni** | 10.0-13.0 | 11.0-13.0 | 11.5-12.5 |
| **Mo** | 1.0-2.7 | 15-2.2 | 1.80-1.90 |
| **Co** | 13.8-17.4 | 15.0-16.0 | 15.4-15.6 |
| **Ti** | 0.02 max. | 0.015 max. | 0.01 max. |
| **Al** | 0.005 max. | 0.003 max. | 0.001 max. |
| **Ce** | 0.030 max. | 0.020 max. | 0.010 max. |
| **La** | 0.010 max. | 0.010 max. | 0.005 max. |

and the balance is iron and impurities. The third steel layer is positioned between the first steel layer and the fourth steel layer and the fourth steel layer is positioned between the second steel layer and the third steel layer. The first steel layer has a first planar surface that is bonded to a first planar surface of the third steel layer, the fourth steel layer has a first planar surface that is bonded to a second planar surface of the third steel layer, and the second steel layer has a first planar surface that is bonded to a second planar surface of the fourth steel layer.

In accordance with a further aspect of the invention, there is provided a method of making multi-layer armor plate as described above. The method according to a first embodiment of this aspect of the invention includes the steps of melting a first steel alloy having the following composition in weight percent:

| | | | |
|---|---|---|---|
| **C** | 0.30-0.46 | 0.30-0.46 | 0.35-0.46 |
| **Mn** | 0.04 max. | 0.04 max. | 0.04 max. |
| **Si** | 0.03 max. | 0.03 max. | 0.03 max. |
| **P** | 0.003 max | 0.003 max | 0.003 max |
| **S** | 0.0010 max. | 0.0010 max. | 0.0010 max. |
| **Cr** | 1.65-2.90 | 1.65-2.90 | 1.65-2.90 |
| **Ni** | 10.5-13.0 | 10.5-13.0 | 10.5-13.0 |
| **Mo** | 1.2-3.4 | 1.8-3.4 | 1.2-3.4 |
| **Co** | 15.4-18.6 | 15.4-18.6 | 15.4-18.6 |
| **Al** | 0.003 max | 0.003 max | 0.003 max |
| **Ti** | 0.015 max. | 0.015 max. | 0.015 max. |
| **O** | 0.0010 max. | 0.0010 max. | 0.0010 max. |
| **N** | 0.0010 max. | 0.0010 max. | 0.0010 max. |

and the balance is iron and impurities, said impurities including not more than about 0.003% phosphorus, not more than about 0.0010% sulfur, not more than about 0.0010% oxygen, and not more than about 0.0010% nitrogen and casting the first steel alloy into a first ingot and then forming the first ingot into a first billet having a planar surface. The method also includes the steps of melting a second steel alloy having the following composition in weight percent:

| | | | |
|---|---|---|---|
| **C** | 0.2-0.33 | 0.20-0.31 | 0.21-0.27 |
| **Mn** | 0.20 max. | 0.15 max. | 0.05 max. |
| **Si** | 0.1 max. | 0.1 max. | 0.1 max. |
| **P** | 0.008 max. | 0.008 max. | 0.008 max. |
| **S** | 0.0040 max. | 0.0025 max. | 0.0020 |
| **Cr** | 2-4 | 2.25-3.5 | 2.5-3.3 |
| **Ni** | 10.5-15 | 10.75-13.5 | 11.0-12.0 |
| **Mo** | 0.75-1.75 | 0.75-1.5 | 1.0-1.3 |
| **Co** | 8-17 | 10-15 | 11-14 |
| **Ti** | 0.02 max | 0.02 max | 0.02 max |
| **Al** | 0.01 max. | 0.01 max. | 0.01 max. |
| **Ce** | SBE up to 0.030 | SBE-0.030 | 0.01 max. |
| **La** | SBE up to 0.01 | SBE-0.01 | 0.005 max. |

and the balance is iron and impurities and casting the second steel alloy to form a second ingot and then forming the second ingot into a second billet having a planar surface. The method further includes the steps of stacking the first and second billets such that the planar surface of the first billet contacts the planar surface of the second billet, bonding the first and second billets across their respective planar surfaces to form a composite billet, hot working the composite billet to form a composite plate having a preselected thickness and having a first layer and a second layer, and then heat treating the composite plate under conditions of time and temperature selected to obtain a first preselected combination of strength and toughness in the first layer and a second preselected combination of strength and toughness in the second layer.

Here and throughout this application the term "percent" or the symbol "%" means percent by weight or percent by mass. The term "face" means a planar surface of a plate or billet form of a steel alloy. The term "SBE" stands for "small but effective amount".

The composition tables set forth above and in the detailed description are provided as convenient summaries of the alloys used in the present invention. They are not intended to restrict the lower and upper values of the ranges of the individual elements in each table for use in combination with each other, or to restrict the ranges of the elements for use solely in combination with each other. Thus, one or more of the element ranges of the broad composition in a table can be used with one or more of the other ranges for the remaining elements in a preferred composition in the same table. In addition, a minimum or maximum for an element of one preferred embodiment in a table can be used with the maximum or minimum for that element from another preferred embodiment in the same table.

### BRIEF DESCRIPTION OF THE DRAWINGS

The foregoing summary as well as the following detailed description will be better understood when read in view of the drawings wherein,
Figure 1 is a schematic cross-sectional view of a first embodiment of a multiple steel layer armor in accordance with the present invention;
Figure 2 is a schematic cross-sectional view of a second embodiment of a multiple steel layer armor in accordance with the present invention;
Figure 3 is a schematic cross-sectional view of a third embodiment of a multiple steel layer armor in accordance with the present invention; and
Figure 4 is a flow diagram of a process for making a multiple steel layer armor in accordance with the present invention.

### DETAILED DESCRIPTION

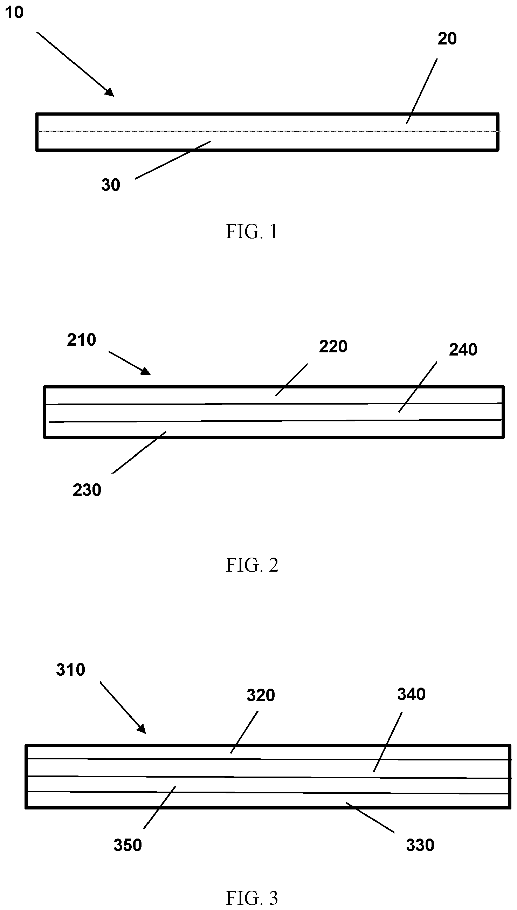

Referring now to Figure 1 of the drawings there is shown a first embodiment of a multiple steel layer (composite) armor plate according the present invention. The armor plate 10 includes a first layer 20 and a second layer 30. The first and second layers are bonded to each other across contacting planar surfaces of each layer. The first layer 20 is made from a steel alloy having the weight percent composition set forth in Table 1 below.

**Table 1**

| | **Broad** | **Preferred A** | **Preferred B** |
|---|---|---|---|
| **C** | 0.30-0.46 | 0.30-0.46 | 0.35-0.46 |
| **Mn** | 0.04 max. | 0.04 max. | 0.04 max. |
| **Si** | 0.03 max. | 0.03 max. | 0.03 max. |
| **P** | 0.003 max | 0.003 max | 0.003 max |
| **S** | 0.0010 max. | 0.0010 max. | 0.0010 max. |
| **Cr** | 1.65-2.90 | 1.65-2.90 | 1.65-2.90 |
| **Ni** | 10.5-13.0 | 10.5-13.0 | 10.5-13.0 |
| **Mo** | 1.2-3.4 | 1.8-3.4 | 1.2-3.4 |
| **Co** | 15.4-18.6 | 15.4-18.6 | 15.4-18.6 |
| **Al** | 0.003 max | 0.003 max | 0.003 max |
| **Ti** | 0.015 max. | 0.015 max. | 0.015 max. |
| **O** | 0.0010 max. | 0.0010 max. | 0.0010 max. |
| **N** | 0.0010 max. | 0.0010 max. | 0.0010 max. |

The balance of the alloy is iron and the usual impurities found in commercial grades of alloys intended for similar service or use. The levels of such elements are controlled to avoid adversely affecting the desired combination of strength, ductility, and toughness. More specifically, phosphorous is restricted to not more than about 0.003% because of its embrittling effect on the alloy. Sulfur, although inevitably present, is restricted to not more than about 0.0010%, because sulfur adversely affects the toughness provided by the alloy. Oxygen is restricted to not more than about 0.0010% and preferably is kept as low as possible. Similarly, nitrogen is restricted to not more than about 0.0010% and is also preferably kept as low as possible in the alloy. The alloy set forth in Table 1 is disclosed in US Nonprovisional Patent Application No. 16/857,413, filed on April 24, 2020, the entirety of which is incorporated herein by reference.

The second layer 30 is made from a steel alloy having the weight percent composition set forth in Table 2 below.

**Table 2**

| | **Broad** | **Intermediate** | **Preferred** |
|---|---|---|---|
| **C** | 0.2-0.33 | 0.20-0.31 | 0.21-0.27 |
| **Mn** | 0.20 max. | 0.15 max. | 0.05 max. |
| **Si** | 0.1 max. | 0.1 max. | 0.1 max. |
| **P** | 0.008 max. | 0.008 max. | 0.008 max. |
| **S** | 0.0040 max. | 0.0025 max. | 0.0020 |
| **Cr** | 2-4 | 2.25-3.5 | 2.5-3.3 |
| **Ni** | 10.5-15 | 10.75-13.5 | 11.0-12.0 |
| **Mo** | 0.75-1.75 | 0.75-1.5 | 1.0-1.3 |
| **Co** | 8-17 | 10-15 | 11-14 |
| **Ti** | 0.02 max | 0.02 max | 0.02 max |
| **Al** | 0.01 max. | 0.01 max. | 0.01 max. |
| **Ce** | SBE¹-0.030 | SBE-0.030 | 0.01 max. |
| **La** | SBE-0.01 | SBE-0.01 | 0.005 max. |

| | | | |
|---|---|---|---|
| SBE means small but effective amount. | | | |

The balance of the alloy is iron and usual impurities. The alloy set forth in Table 2 is disclosed in US Patent No. 5,268,044, the entirety of which is incorporated herein by reference. As described therein, effective amounts of cerium and lanthanum are present when the ratio Ce/S in the alloy is at least 2.

Referring now to Figure 2, there is shown a second embodiment of a composite armor plate according to the invention. The armor plate 210 includes a first outer layer 220 and a second outer layer 230. A third or intermediate steel layer 240 is positioned between the first outer layer 220 and the second outer layer 230. The three steel layers are bonded together to form the multiple layer armor plate. More specifically, the first outer layer 220 is bonded to the intermediate layer 240 across contacting planar surfaces of the first outer layer and the intermediate layer and the second outer layer 230 is bonded to the intermediate layer 240 across second contacting surfaces of the second outer layer and the intermediate layer. The first outer layer 220 is made from the steel alloy having the weight percent composition set forth in Table 1 above and the second outer layer 230 is made from the steel alloy having the weight percent composition set forth in Table 2 above. The intermediate steel layer 240 is made from a steel alloy having a weight percent composition as set forth in either Table 3 below or Table 4 below.

**Table 3**

| | **Broad** | **Preferred** |
|---|---|---|
| **C** | 0.21-0.34 | 0.22-0.30 |
| **Mn** | 0.20 max. | 0.05 max. |
| **Si** | 0.10 max. | 0.10 max. |
| **P** | 0.008 max. | 0.006 max. |
| **S** | 0.003 max. | 0.002 max. |
| **Cr** | 1.5-2.8 | 1.80-2.80 |
| **Mo** | 0.90-1.80 | 1.10-1.70 |
| **Ni** | 10-13 | 10.5-11.5 |
| **Co** | 14.0-22.0 | 14.0-20.0 |
| **Al** | 0.1 max. | 0.01 max. |
| **Ti** | 0.05 max. | 0.02 max. |
| **Ce** | 0.030 max. | 0.01 max. |
| **La** | 0.010 max. | 0.005 max. |

The balance of the alloy is iron and usual impurities. The alloy set forth in Table 3 is disclosed in US Patent No. 5,866,066, the entirety of which is incorporated herein by reference.

**Table 4**

| | **Broad** | **Intermediate** | **Preferred** |
|---|---|---|---|
| **C** | 0.30-0.36 | 0.32-0.35 | 0.32-0.34 |
| **Mn** | 0.05 max. | 0.02 max. | 0.01 max. |
| **Si** | 0.05 max. | 0.05 max. | 0.03 max. |
| **P** | 0.01 max. | 0.005 max. | 0.003 max. |
| **S** | 0.0010 max. | 0.0010 max. | 0.0005 max |
| **Cr** | 1.30-3.2 | 2.0-2.5 | 2.20-2.30 |
| **Ni** | 10.0-13.0 | 11.0-13.0 | 11.5-12.5 |
| **Mo** | 1.0-2.7 | 15-2.2 | 1.80-1.90 |
| **Co** | 13.8-17.4 | 15.0-16.0 | 15.4-15.6 |
| **Ti** | 0.02 max. | 0.015 max. | 0.01 max. |
| **Al** | 0.005 max. | 0.003 max. | 0.001 max. |
| **Ce** | 0.030 max. | 0.020 max. | 0.010 max. |
| **La** | 0.010 max. | 0.010 max. | 0.005 max. |

The balance of the alloy is iron and usual impurities. The alloy set forth in Table 4 is disclosed in US Patent Application Publication 2007/0113931A1, the entirety of which is incorporated herein by reference.

The alloys described in Tables 3 and 4 are designed to provide combinations of hardness, strength, and toughness that are intermediate the properties of the alloys described in Tables 1 and 2. In this manner, the three-layer embodiment of the armor plate shown in Figure 2 is capable of providing a gradient of strength and toughness ranging from the very high hardness, high strength first outer layer 220 to the high toughness second outer layer 230. The gradient in hardness, strength, and toughness is believed to provide better protection from an AP projectile than the two-layer embodiment shown and described with reference to Figure 1.

Referring now to Figure 3, there is shown a further embodiment of a composite armor plate according to the invention. The armor plate 310 includes a first outer layer 320 and a second outer layer 330. A first intermediate steel layer 340 and a second intermediate layer 350 are positioned between the first outer layer 320 and the second outer layer 330. The first intermediate steel layer 340 is preferably positioned adjacent to the first outer layer 320. The second intermediate layer 350 is positioned adjacent to the second outer layer 330. The four steel layers are bonded together across their respective contacting planar surfaces to form the multiple layer armor plate. More specifically, the first outer layer 320 is bonded to the first intermediate layer 340 across contacting planar surfaces of the first outer layer and the first intermediate layer. The first intermediate layer 340 is bonded to the second intermediate layer 350 across contacting planar surfaces of the first intermediate layer and the second intermediate layer. The second outer layer 330 is bonded to the second intermediate layer 350 across contacting surfaces of the second outer layer and the second intermediate layer. The first outer layer 320 is made from the steel alloy having the weight percent composition set forth in Table 1 above and the second outer layer 330 is made from the steel alloy having the weight percent composition set forth in Table 2 above. The first intermediate steel layer 340 is made from a steel alloy having the weight percent composition set forth in Table 4 above and the second intermediate layer is made from a steel alloy having the weight percent composition set forth in Table 3 above. The armor plate embodiment of Figure 3 provides a greater gradient of strength and toughness which is believed to result in better protection from an AP projectile than the two-layer embodiment of Figure 1 and the three-layer embodiment of Figure 2.

An advantage of using only the alloys set forth in Tables 1-4 able to make the composite armor is that they are from the same alloying family and are heat treated similarly. Thus, the alloys are solution treated, quenched, refrigerated, and aged. The preferred solution treatment temperatures for each alloy are slightly different, but all of the alloys can be aged at about 900°F. The preferred heat treatment for each combination of steel layers would be selected to provide the highest hardness for the first outer layer.

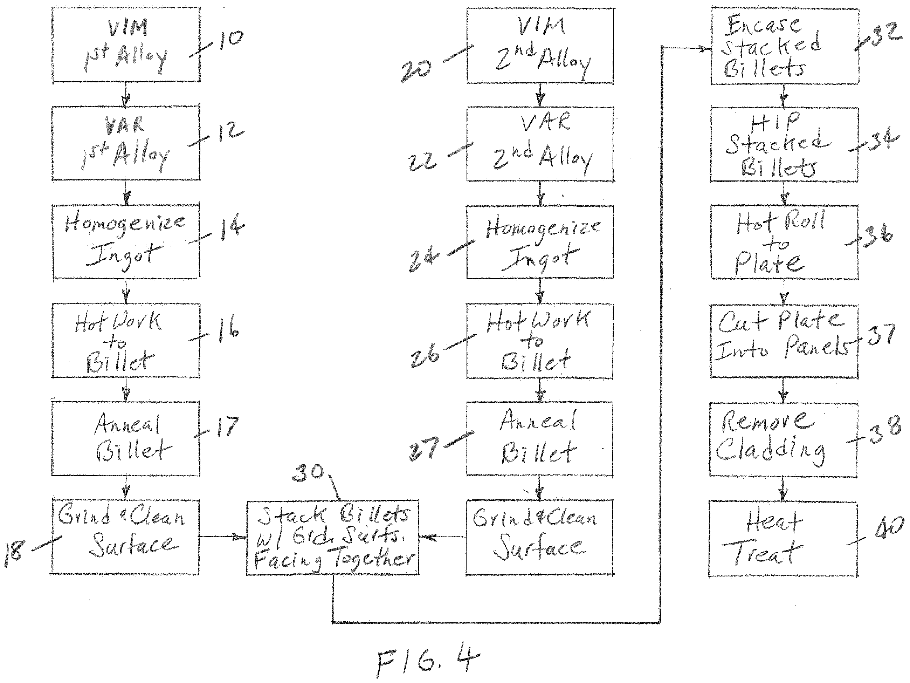

Shown in Figure 4 is a flow chart of a process to make a two-layer armor plate as described above. The alloys used in the present invention are readily melted using conventional vacuum melting techniques, such as vacuum induction melting (VIM). Alternatively, a double vacuum melting practice can be used. For example, one practice is to melt a heat of each alloy by VIM and cast the heats in the form of electrodes. (Steps 10 and 20.) The alloying additions for sulfide shape control referred to above are preferably made before the molten VIM heat is cast. If additional refinement of the VIM ingot is desired, the electrode ingot can be vacuum arc remelted (VAR) and recast into one or more ingots. (Steps 12 and 22.) Prior to VAR, the electrode ingot is preferably stress relieved at about 1250°F (677°C) for 4-16 hours and air cooled. The VIM ingot or the VAR ingot, is preferably homogenized at about 2150°F-2250°F (1177°C-1232°C) for 6-24 hours. (Steps 14 and 24.) The alloys can be hot worked from a starting temperature of about 2250°F (1232°C) down to about 1500°F (815.6°C) to form billets of the alloys. (Steps 16 and 26.)

The gradient armor plate according to the invention can be produced by mechanically bonding two or more layers together. This can be achieved by forming billets from the ingots of each alloy to be included in the gradient armor plate as described above, grinding the planar surfaces of the billets to clean the surfaces (Steps 18 and 28.) and then stacking the billets with the ground surfaces in contact with each other. (Step 30.) It may be preferable to anneal the billets of each alloy prior to the surface grinding and cleaning step. (Steps 17 and 27.) The stacked billets can then be encased in a mild steel can (Step 32) and then hot isostatically pressed (HIP'd) to thermomechanically bond the billets together across their respective contacting planar surfaces (Step 34). The composite billet can then be hot rolled on a plate mill to form an elongated plate product having a desired thickness. (Step 36.) The plate is preferably cut into panels. (Step 37.) The mild steel can forms a cladding on the composite billet and plate during HIP'g and hot rolling. The cladding is removed from the plate panels, preferably by a grinding process. (Step 38.) The composite plate panels are then heat treated as described more fully below to develop the combinations of strength, hardness, and toughness that are needed for the armor application. (Step 40.) It will be appreciated by those skilled in the art that the process illustrated in Figure 4 can easily be modified to include a an intermediate layer of the alloy described in Table 3, an intermediate layer of the alloy described in Table 4, or both, to create a 3-layer or 4-layer gradient armor plate.

As an alternative to the process shown in Figure 4, the stacked plates can be welded together along their edges and then hot rolled to provide a gradient armor plate of desired thickness by effecting a mechanical or diffusion bond between the plates. The gradient armor plate would then be heat treated as described above to obtain the desired combinations of hardness, strength, and toughness across the thickness of the armor plate.

Heat treating to obtain the desired combination of properties in the gradient armor preferably proceeds as follows. The gradient armor plate is austenitized by heating it at about 1550°F-1900°F (843.3°C-1037.8°C) for about 1 hour plus about 5 minutes per inch of thickness and then quenching. The quench rate is preferably rapid enough to cool the alloy from the austenizing temperature to about 150°F (65.6°C) in not more than about 2 hours. The preferred quenching technique will depend on the thickness of the gradient armor plate. However, the hardenability of the alloys is good enough to permit air cooling, vermiculite cooling, or inert gas quenching in a vacuum furnace, as well as oil quenching. As an alternative, it is possible to austenitize the gradient armor plate using a two-step process in which the plate is first heated at about 1850-1900°F (1010-1037.8°C) for the time described above, cooled to room temperature, then heated at about 1750-1850°F (954.4-1010°C) for a similar time, and then air cooled. After the austenitizing treatment, the armor plate is preferably cold treated as by deep chilling at about -100°F (-73.3°C) for about 0.5-1 hour and then warmed in air.

Age hardening of the alloys used in the armor plate is preferably conducted by heating the gradient armor plate at about 850°F-950°F (454.4°C-510°C) for up to about 8 hours, preferably at least about 6 or 7 hours, followed by cooling in air. To maximize the strength and toughness properties provided by the alloy, a double aging technique can be used. For example, instead of using a single aging treatment, the aging treatment can be performed with two, separate aging treatments at the aging temperature described above for about 3.5 to 4 hours each. When the two-step aging treatment is used, the armor plate is deep chilled as described above after the first aging step. The cold treatment step between aging steps ensures maximum transformation of any reverted austenite to martensite. If desired, a second cold treatment step can be performed after the second aging step.

Another advantage of the gradient armor plate of this invention is that because the four alloys are from the same alloy family, the same metallurgical phases would be present in each alloy layer and the phase transformation temperatures will be similar. The alloys used in the gradient armor plate according to the invention have a ductile Fe-Ni lath martensite structure in the matrix which is hardened by the precipitation of M₂C carbides. In addition, the coefficients of thermal expansion of the alloy should also be similar, so there would be a lower likelihood of the steel layers delaminating.

The terms and expressions which are employed in this specification are used as terms of description and not of limitation. There is no intention in the use of such terms and expressions of excluding any equivalents of the features shown and described or portions thereof. It is recognized that various modifications are possible within the invention described and claimed herein.

## Claims

1. An armor plate comprising:
a first steel layer made from a first steel alloy having the following composition in weight percent,
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen; and
a second steel layer made from a second steel alloy having the following composition in weight percent,
| | |
|---|---|
| **C** | 0.2-0.33 |
| **Mn** | 0.20 max. |
| **Si** | 0.1 max. |
| **P** | 0.008 max. |
| **S** | 0.0040 max. |
| **Cr** | 2-4 |
| **Ni** | 10.5-15 |
| **Mo** | 0.75-1.75 |
| **Co** | 8-17 |
| **Ti** | 0.02 max |
| **Al** | 0.01 max. |
| **Ce** | SBE up to 0.030 |
| **La** | SBE up to 0.01 |
and the balance is iron and impurities;
wherein said first steel layer has a first planar surface that is bonded to a first planar surface of said second steel layer to form a composite armor plate.

2. The armor plate as claimed in Claim 1 wherein the first steel alloy has the following composition in weight percent
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.8-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen.

3. The armor plate as claimed in Claim 1 wherein the first steel alloy has the following composition in weight percent
| | |
|---|---|
| **C** | 0.35-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen.

4. The armor plate as claimed in any one of Claims 1 to 3 wherein the second steel alloy has the following composition in weight percent
| | |
|---|---|
| **C** | 0.20-0.31 |
| **Mn** | 0.15 max. |
| **Si** | 0.1 max. |
| **P** | 0.008 max. |
| **S** | 0.0025 max. |
| **Cr** | 2.25-3.5 |
| **Ni** | 10.75-13.5 |
| **Mo** | 0.75-1.5 |
| **Co** | 10-15 |
| **Ti** | 0.02 max |
| **Al** | 0.01 max. |
| **Ce** | SBE up to 0.030 |
| **La** | SBE up to 0.01 |
and the balance is iron and impurities.

5. The armor plate as claimed in any one of Claims 1 to 3 wherein the second steel alloy has the following composition in weight percent
| | |
|---|---|
| **C** | 0.21-0.27 |
| **Mn** | 0.05 max. |
| **Si** | 0.1 max. |
| **P** | 0.008 max. |
| **S** | 0.0020 |
| **Cr** | 2.5-3.3 |
| **Ni** | 11.0-12.0 |
| **Mo** | 1.0-1.3 |
| **Co** | 11-14 |
| **Ti** | 0.02 max |
| **Al** | 0.01 max. |
| **Ce** | 0.01 max. |
| **La** | 0.005 max. |
and the balance is iron and impurities.

6. An armor plate comprising:
a first steel layer made from a first steel alloy having the following composition in weight percent,
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen;
a second steel layer made from a second steel alloy having the following composition in weight percent,
| | |
|---|---|
| **C** | 0.2-0.33 |
| **Mn** | 0.20 max. |
| **Si** | 0.1 max. |
| **P** | 0.008 max. |
| **S** | 0.0040 max. |
| **Cr** | 2-4 |
| **Ni** | 10.5-15 |
| **Mo** | 0.75-1.75 |
| **Co** | 8-17 |
| **Ti** | 0.02 max |
| **Al** | 0.01 max. |
| **Ce** | SBE up to 0.030 |
| **La** | SBE up to 0.01 |
and the balance is iron and impurities; and
a third steel layer made from a third steel alloy having the following composition in weight percent,
| | |
|---|---|
| **C** | 0.21-0.34 |
| **Mn** | 0.20 max. |
| **Si** | 0.10 max. |
| **P** | 0.008 max. |
| **S** | 0.003 max. |
| **Cr** | 1.5-2.8 |
| **Mo** | 0.90-1.80 |
| **Ni** | 10-13 |
| **Co** | 14.0-22.0 |
| **Al** | 0.1 max. |
| **Ti** | 0.05 max. |
| **Ce** | 0.030 max. |
| **La** | 0.010 max. |
wherein said third steel layer is positioned between the first steel layer and the second steel layer; and
wherein the first steel layer has a first planar surface that is bonded to a first planar surface of said third steel layer and the second steel layer has a first planar surface that is bonded to a second planar surface of said third steel layer.

7. The armor plate as claimed in Claim 6 wherein the first steel alloy has the following composition in weight percent,
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.8-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen.

8. The armor plate as claimed in Claim 6 wherein the first steel alloy has the following composition in weight percent
| | |
|---|---|
| **C** | 0.35-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen.

9. The armor plate as claimed in any one of Claims 6 to 8 wherein the second steel alloy has the following composition in weight percent
| | |
|---|---|
| **C** | 0.20-0.31 |
| **Mn** | 0.15 max. |
| **Si** | 0.1 max. |
| **P** | 0.008 max. |
| **S** | 0.0025 max. |
| **Cr** | 2.25-3.5 |
| **Ni** | 10.75-13.5 |
| **Mo** | 0.75-1.5 |
| **Co** | 10-15 |
| **Ti** | 0.02 max |
| **Al** | 0.01 max. |
| **Ce** | SBE up to 0.030 |
| **La** | SBE up to 0.01 |
and the balance is iron and impurities.

10. The armor plate as claimed in any one of Claims 6 to 8 wherein the second steel alloy has the following composition in weight percent
| | |
|---|---|
| **C** | 0.21-0.27 |
| **Mn** | 0.05 max. |
| **Si** | 0.1 max. |
| **P** | 0.008 max. |
| **S** | 0.0020 |
| **Cr** | 2.5-3.3 |
| **Ni** | 11.0-12.0 |
| **Mo** | 1.0-1.3 |
| **Co** | 11-14 |
| **Ti** | 0.02 max |
| **Al** | 0.01 max. |
| **Ce** | 0.01 max. |
| **La** | 0.005 max. |
and the balance is iron and impurities.

11. The armor plate as claimed in any one of Claims 6 to 10 wherein the third steel alloy has the following composition in weight percent
| | |
|---|---|
| **C** | 0.22-0.30 |
| **Mn** | 0.05 max. |
| **Si** | 0.10 max. |
| **P** | 0.006 max |
| **S** | 0.002 max. |
| **Cr** | 1.80-2.80 |
| **Mo** | 1.10-1.70 |
| **Ni** | 10.5-11.5 |
| **Co** | 14.0-20.0 |
| **Al** | 0.01 max. |
| **Ti** | 0.02 max. |
| **Ce** | 0.01 max. |
| **La** | 0.005 max. |
and the balance is iron and impurities.

12. An armor plate comprising:
a first steel layer made from a first steel alloy having the following composition in weight percent,
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen;
a second steel layer made from a second steel alloy having the following composition in weight percent,
| | |
|---|---|
| **C** | 0.2-0.33 |
| **Mn** | 0.20 max. |
| **Si** | 0.1 max. |
| **P** | 0.008 max. |
| **S** | 0.0040 max. |
| **Cr** | 2-4 |
| **Ni** | 10.5-15 |
| **Mo** | 0.75-1.75 |
| **Co** | 8-17 |
| **Ti** | 0.02 max |
| **Al** | 0.01 max. |
| **Ce** | SBE up to 0.030 |
| **La** | SBE up to 0.01 |
and the balance is iron and impurities;
a third steel layer made from a third steel alloy having the following composition in weight percent,
| | |
|---|---|
| **C** | 0.21-0.34 |
| **Mn** | 0.20 max. |
| **Si** | 0.10 max. |
| **P** | 0.008 max. |
| **S** | 0.003 max. |
| **Cr** | 1.5-2.8 |
| **Mo** | 0.90-1.80 |
| **Ni** | 10-13 |
| **Co** | 14.0-22.0 |
| **Al** | 0.1 max. |
| **Ti** | 0.05 max. |
| **Ce** | 0.030 max. |
| **La** | 0.010 max. |
and the balance is iron and impurities; and
a fourth steel layer made from a fourth steel alloy having the following composition in weight percent,
| | |
|---|---|
| **C** | 0.30-0.36 |
| **Mn** | 0.05 max. |
| **Si** | 0.05 max. |
| **P** | 0.01 max. |
| **S** | 0.0010 max. |
| **Cr** | 1.30-3.2 |
| **Ni** | 10.0-13.0 |
| **Mo** | 1.0-2.7 |
| **Co** | 13.8-17.4 |
| **Ti** | 0.02 max. |
| **Al** | 0.005 max. |
| **Ce** | 0.030 max. |
| **La** | 0.010 max. |
and the balance is iron and impurities;
wherein said third steel layer is positioned between the first steel layer and the fourth steel layer and the fourth steel layer is positioned between the second steel layer and the third steel layer;
wherein the first steel layer has a first planar surface that is bonded to a first planar surface of said third steel layer, the fourth steel layer has a first planar surface that is bonded to a second planar surface of said third steel layer, and said second steel layer has a first planar surface that is bonded to a second planar surface of said fourth steel layer.

13. The armor plate as claimed in Claim 12 wherein the first steel alloy has the following composition in weight percent,
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.8-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen.

14. The armor plate as claimed in Claim 12 wherein the first steel alloy has the following composition in weight percent
| | |
|---|---|
| **C** | 0.35-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen.

15. The armor plate as claimed in any one of Claims 12 to 14 wherein the second steel alloy has the following composition in weight percent
| | |
|---|---|
| **C** | 0.20-0.31 |
| **Mn** | 0.15 max. |
| **Si** | 0.1 max. |
| **P** | 0.008 max. |
| **S** | 0.0025 max. |
| **Cr** | 2.25-3.5 |
| **Ni** | 10.75-13.5 |
| **Mo** | 0.75-1.5 |
| **Co** | 10-15 |
| **Ti** | 0.02 max |
| **Al** | 0.01 max. |
| **Ce** | SBE up to 0.030 |
| **La** | SBE up to 0.01 |
and the balance is iron and impurities.

16. The armor plate as claimed in any one of Claims 12 to 14 wherein the second steel alloy has the following composition in weight percent
| | |
|---|---|
| **C** | 0.21-0.27 |
| **Mn** | 0.05 max. |
| **Si** | 0.1 max. |
| **P** | 0.008 max. |
| **S** | 0.0020 |
| **Cr** | 2.5-3.3 |
| **Ni** | 11.0-12.0 |
| **Mo** | 1.0-1.3 |
| **Co** | 11-14 |
| **Ti** | 0.02 max |
| **Al** | 0.01 max. |
| **Ce** | 0.01 max. |
| **La** | 0.005 max. |
and the balance is iron and impurities.

17. The armor plate as claimed in any one of Claims 12 to 16 wherein the third steel alloy has the following composition in weight percent,
| | |
|---|---|
| **C** | 0.22-0.30 |
| **Mn** | 0.05 max. |
| **Si** | 0.10 max. |
| **P** | 0.006 max. |
| **S** | 0.002 max. |
| **Cr** | 1.80-2.80 |
| **Mo** | 1.10-1.70 |
| **Ni** | 10.5-11.5 |
| **Co** | 14.0-20.0 |
| **Al** | 0.01 max. |
| **Ti** | 0.02 max. |
| **Ce** | 0.01 max. |
| **La** | 0.005 max. |
and the balance is iron and impurities.

18. The armor plate as claimed in any one of Claims 12 to 17 wherein the fourth steel alloy has the following composition in weight percent,
| | |
|---|---|
| **C** | 0.32-0.35 |
| **Mn** | 0.02 max. |
| **Si** | 0.05 max. |
| **P** | 0.005 max. |
| **S** | 0.0010 max. |
| **Cr** | 2.0-2.5 |
| **Ni** | 11.0-13.0 |
| **Mo** | 15-2.2 |
| **Co** | 15.0-16.0 |
| **Ti** | 0.015 max. |
| **Al** | 0.003 max. |
| **Ce** | 0.020 max. |
| **La** | 0.010 max. |
and the balance is iron and impurities.

19. The armor plate as claimed in any one of Claims 12 to 17 wherein the fourth steel alloy has the following composition in weight percent,
| | |
|---|---|
| **C** | 0.32-0.34 |
| **Mn** | 0.01 max. |
| **Si** | 0.03 max. |
| **P** | 0.003 max. |
| **S** | 0.0005 max. |
| **Cr** | 2.20-2.30 |
| **Ni** | 11.5-12.5 |
| **Mo** | 1.80-1.90 |
| **Co** | 15.4-15.6 |
| **Ti** | 0.01 max. |
| **Al** | 0.001 max. |
| **Ce** | 0.010 max. |
| **La** | 0.005 max. |
and the balance is iron and impurities.

20. A method of making an armor plate comprising the steps of:
melting a first steel alloy having the following composition in weight percent:
| | |
|---|---|
| **C** | 0.30-0.46 |
| **Mn** | 0.04 max. |
| **Si** | 0.03 max. |
| **P** | 0.003 max |
| **S** | 0.0010 max. |
| **Cr** | 1.65-2.90 |
| **Ni** | 10.5-13.0 |
| **Mo** | 1.2-3.4 |
| **Co** | 15.4-18.6 |
| **Al** | 0.003 max |
| **Ti** | 0.015 max. |
| **O** | 0.0010 max. |
| **N** | 0.0010 max. |
and the balance is iron and impurities, said impurities including not more than about 0.003% phosphorus, not more than about 0.0010% sulfur, not more than about 0.0010% oxygen, and not more than about 0.0010% nitrogen and casting the first steel alloy into a first ingot;
forming the first ingot into a first billet having a planar surface;
melting a second steel alloy having the following composition in weight percent:
| | |
|---|---|
| **C** | 0.2-0.33 |
| **Mn** | 0.20 max. |
| **Si** | 0.1 max. |
| **P** | 0.008 max. |
| **S** | 0.0040 max. |
| **Cr** | 2-4 |
| **Ni** | 10.5-15 |
| **Mo** | 0.75-1.75 |
| **Co** | 8-17 |
| **Ti** | 0.02 max |
| **Al** | 0.01 max. |
| **Ce** | SBE up to 0.030 |
| **La** | SBE up to 0.01 |
and the balance is iron and impurities and casting the second steel alloy to form a second ingot;
forming the second ingot into a second billet having a planar surface;
stacking the first and second billets such that the planar surface of the first billet contacts the planar surface of the second billet;
bonding the first and second billets across their respective planar surfaces to form a composite billet;
hot working the composite billet to form a composite plate having a preselected thickness and having a first layer and a second layer; and then
heat treating the composite plate under conditions of time and temperature selected to obtain a first preselected combination of strength and toughness in the first layer and a second preselected combination of strength and toughness in the second layer.

21. The method as set forth in Claim 20 wherein the step of bonding the first and second billets comprises the steps of:
encasing the stacked first and second billets in a metallic encasement; and then
hot isostatic pressing the stacked first and second billets in the metallic encasement.
